(19) **Europäisches Patentamt / European Patent Office / Office européen des brevets**

(11) **EP 1 523 205 B1**

(12) **EUROPEAN PATENT SPECIFICATION**

(45) Date of publication and mention
of the grant of the patent:
**16.04.2014 Bulletin 2014/16**

(51) Int Cl.:
*G06F 21/35* (2013.01)     *H04M 17/02* (2006.01)
*H04W 8/18* (2009.01)     *H04W 92/08* (2009.01)

(21) Application number: **04447224.9**

(22) Date of filing: **11.10.2004**

(54) **Method and system for accessing a smart card stored in a telecommunications card from a host device to which said telecommunications card is connected**

Zugangs-Verfahren und Zugangs-System zur Chipkarte auf einer Telekommunikationskarte durch ein mit der Telekommunikationskarte verbundenen Hostgerätes

Procédé et système d'accès à une carte à puce sur une carte de télécommunications par un dispositif hôte auquel ladite carte de télécommunications est connectée

(84) Designated Contracting States:
**AT BE BG CH CY CZ DE DK EE ES FI FR GB GR HU IE IT LI LU MC NL PL PT RO SE SI SK TR**

(30) Priority: **10.10.2003 EP 03447247**

(43) Date of publication of application:
**13.04.2005 Bulletin 2005/15**

(73) Proprietor: **Option**
**3001 Heverlee (BE)**

(72) Inventors:
• **van Overbeke, Geert**
**3000 Leuven (BE)**

• **Heylen, Jan**
**2440 Geel (BE)**
• **Vercruysse, Jan**
**3052 Blanden (BE)**

(74) Representative: **Sarlet, Steven Renaat Irène et al**
**Gevers Patents**
**Intellectual Property House**
**Holidaystraat 5**
**1831 Diegem (BE)**

(56) References cited:
**WO-A1-98/27767     DE-A1- 19 522 527**
**FR-A1- 2 818 764     US-A- 5 942 738**

Printed by Jouve, 75001 PARIS (FR)

## Description

The present invention relates to a method for accessing a smart card from a host device, such as for example a laptop or notebook PC, according to the preamble of claim 1.

The present invention further relates to a system for accessing a smart card from a host device, such as for example a laptop or notebook PC, according to the preamble of claim 7.

Today, smart card manufacturers make use of their own developed USB dongle containing a smart card reader. The PCSC-driver and the plug and play mechanism of Windows provide the OS with all information which enables any application running on the host device to utilise the smart card connected via the USB dongle for its own purpose.

On the other hand, telecommunications cards are known, which enable the host device to communicate via a telecommunication network. For enabling user identification towards the used telecommunication network, these telecommunication cards carry a smart card with user specific information and have a smart card reader on board. However, as it has been implemented up to now, this smart card can only be used for user identification purposes towards the network operator.

From US 5 942 738 A, a smart IC card system is known comprising an IC card and an IC card reader for executing financial transactions.

From WO 98/27767 A1 a method is known for conveying control commands for SIM cards from an external apparatus to the SIM card.

From FR 2 818 764 A1 a method is known for executing operations on a smart card starting from a computer.

From DE 195 22 527 A1 a method is known for enabling communication between an application and a smart card.

It is an aim of this invention to provide a method and system for accessing the smart card stored in the telecommunications card from the host device.

This aim is achieved by the method showing the steps of the characterising part of claim 1 and by a system according to claim 7.

More particularly, an access command is provided on the host device, which is provided for instructing the command interpreter of the telecommunications card to pass on a command, which originates from the host device and is attached to the access command, directly to the smart card. For accessing the smart card from the host device, an application command is then attached to the access command and this combination is forwarded to the command interpreter, who is thus instructed to pass on the application command to the smart card. The response which is given by the smart card to the application command is stored in a buffer which is accessible towards the host device, so that the response can be read and used on the host device for further processing.

The use of the smart card reader on board the telecommunications card as generic smart card reader towards the host device has the advantage that the need for a separate smart card reader, such as a USB dongle, is avoided. As a result, the interface to which this separate smart card reader would be connected, such as a USB gate, remains free for connecting other devices. Furthermore, the user does no longer need to purchase separated devices for telecommunication and smart card access.

In a preferred embodiment of the method of the invention, the access command is included in a driver which is provided on the host device. This makes the access command available to any application running on the host device, so that any such application can gain access to the smart card stored in the telecommunications card by simply attaching its application command to the access command defined in the driver.

The accessibility to the smart card stored in the telecommunications card for applications running on the host device has the advantage that this smart card can be used for user authentication purposes on the host device instead of a smart card connected via a separate reader. This can not only avoid the need for the user to purchase two different smart cards for different applications, but also makes the one smart card available for the applications running on the host device while in use as user identification module towards the telecommunications network operator. As a result, the smart card can be used for authentication in internet sale, WLAN authentication, VPN security, banking wire transfers, user identification upon power-up of the host device, etc.

The invention will be further elucidated by means of the following description and the appended figures.

Figure 1 schematically shows the interaction between the user, the host device, the telecommunications card and the telecommunications network with the method of the invention.

Figure 2 shows how an access command AT+CSIM is used, according to the invention, by an application on the host device for verifying personal code information from the smart card.

Figure 3 shows how a personal code request command AT+CPIN / AT+CPIN? is used according to the invention by the modem for verifying personal code information from the smart card.

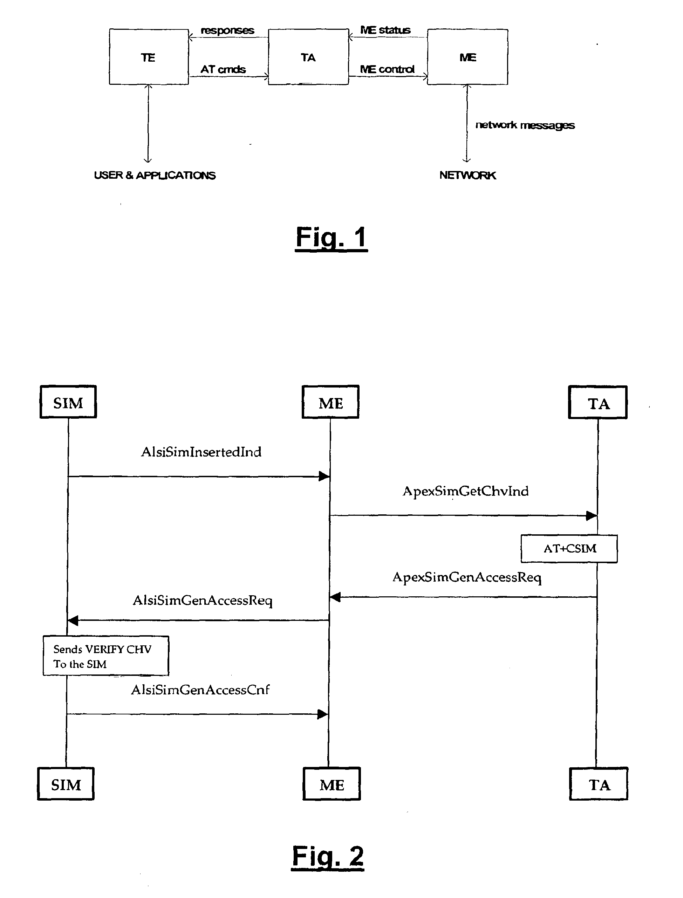

As shown in figure 1, the method of the invention enables access to a smart card SIM stored in a telecommunications card MT from a host device TE. The telecommunications card MT enables telecommunication between the host device TE and a telecommunications network which requires a smart card SIM for user identification, which may for instance include one or more of the following 3GPP Access Technologies: GSM/GPRS/UMTS or WLAN 802.11abg and 802.16. The telecommunications card MT comprises a command interpreter TA for interpreting host device commands and a modem ME with associated smart card reader for reading the smart card SIM. As used herein, the term smart card includes "SIM", "USIM" (3GPP UMTS SIM) and "UICC" (3GPP2 CDMA1x and CDMA2K) and any other smart card used for user identification purposes known to the person skilled in the art. The modem ME enables the telecommunication and the user identification, but is only accessible to the host device via the command interpreter TA.

In order to enable applications running on the host device TE to access the smart card SIM, an access command AT+CSIM is presented on the host device, for example in a PCSC driver for Windows XP. This access command - when executed - instructs the command interpreter TA to pass on any attached APDU (Application Protocol Data Unit) command originating from the host device TE to the smart card reader in the ME. Any response from the SIM to such an APDU is buffered in a first buffer which is accessible to the host device TE, so that the response can be read out to the host device in a next step. This first buffer is preferably provided on the TA, but may also be located on the ME or elsewhere on the MT.

With the method of the invention, any exchange of information with the SIM will be done by pure APDU commands with the AT+CSIM as the sole transporter, instead of applying AT-commands in order to have access to the SIM. For instance the functionality of the AT+CPIN (see below) may as well be sent by an APDU command. The huge advantage of employing APDU commands directly is that there is no need to translate them to AT commands, i.e. commands interpretable by the command interpreter TA.

When the method of the invention is implemented on a Windows system, the standard factory drivers will externally be visible as normal and there will be a driver that supports the Microsoft Interface for APDU. For the APDU commands "wrapped" in the AT+CSIM command to send, a MUX Command channel is allocated, which is not being used by the Command and Data ports. At installation of the telecommunications card, a Smartcard compatible device driver is exposed which is acceptable to Windows as a standard Smartcard Device. This Smartcard driver can use the Windows Smartcard library and environment to process Smartcard requests from XP and hence form user(TE) applications. Of course, the method and algorithm of the invention can also be implemented in other operating systems known to the person skilled in the art.

In the following, a number of measures will be described which contribute to the functioning of the access method of the invention and prevent harm to the telecommunication operations which may occur simultaneously.

A first measure is to store smart card type data (ATR_structure) in a second buffer, preferably on the modem ME, and to include a type request command AT_OATR in the PCSC driver on the host device TE. This enables the application which wants to access the SIM to first readout the smart card type data from the second buffer, assuring itself that the SIM is suitable. By buffering this information, the readout of the smart card type data and subsequently the AT_OATR will not power up or down the SIM, so that any ongoing telecommunication is not hampered. Once a valid ATR_structure is returned, AT+CSIM/APDU commands are to be sent.

Assuming that the telecommunications card MT is inserted, powered and SIM card is present, sending the AT_OATR command will return the ATR_structure information in the same way as it was sent through the SIM task on reset/start-up, but no reset/start-up occurs since the information is read from the buffer.

The AT_OATR is implemented using the following bidirectional signals between TA and ME: each time an APEX_SIM_ATR_INFO_REQ/ALSI SIM_ATR_INFO_REQ is received, the ATR_structure is returned in the confirmation signals APEX-SIM-ATR-INFO-CNF/ALSI-SIM-ATR-INFO-CNF.

If the SIM card is in a state other than the "SIM ready" state AT_OATR will return CME ERROR (paragraph 9.2 of TS 27.007 spec). That way the host device TE will know if the SIM is not present, busy or whatever reason why the TE could not access the SIM at that moment.

The ATR_structure holds state information and the capabilities about the Smart card reader. The last member of this ATR_structure stores the capabilities of the SIM card, the ATR value. To sum up, the ATR_structure comprises the following members:

- CurrentState: contains the status of the card:

| Status | Meaning |
|---|---|
| SCARD_UNKNOWN | The Smart card reader does not know the status. |
| SCARD_ABSENT | No card is currently inserted. |
| SCARD_PRESENT | A card is inserted. |

- ClkFrequency: contains the standard clock frequency that the Smart card reader runs at, in KHz, encoded in little-endian format. For example, 3.58 MHz would be encoded as 3580.
- BaudRatefactors: contains a byte that codes in binary the unsigned positive integers FI and DI. FI is the reference to a clock rate conversion factor over the bits b8 to b5. DI is the reference to a baud rate adjustment factor over the bits b4 to b1. FI and DI are referencing respectively the factors F and D. Both factors will define the standard baud rate of the Smart card reader. The baud rate period of the transmission clock of the data bit between the smart card and the physical interface device is called the Elementary Time Unit. From the system clock provided to the smart card the ETU is defined by both the Clock Rate Conversion Factor F and the Bit Rate Adjustment Factor D, as follows:

$$1 \ etu \ = \ \frac{F}{D} \times \frac{1}{f}$$

The possible (F/D) pair values are defined in the ISO7816-3 standard.

- PowerMgmtSupport: A flag with a value of zero indicates that the reader does not support clock stop mode. Either a zero indicating that the clock will stop at a level of zero Volts, or a one indicating the clock will stop at the highest voltage level should follow the flag value of 1.

- VoltagesSupportedList: contains a list of voltages, in Volt, supported by the Smart card reader physically embedded in the ME Baseband.

- ATR: the answer to reset (ATR) information, which the smart card provides to the reader after a warm or cold reset, consists of the initial character TS followed by at most 32 characters. See the relevant ISO/IEC7816-3 and the 3GPP TS 11.11 Rel '98 specifications. Response to the command passed on by the SIM to the ME in the format as described in GSM 11.11 [28] (hexadecimal character format; refer AT+CSCS). When ATR is not available response will be with a CME ERROR specified in paragraph 9.2 of TS 27.007.

A second measure is that the command interpreter TA takes the initiative for getting a response from the addressed memory location on the smart card. The problem which is solved here is that most AT+CSIM commands need to be executed in two phases of access to the SIM. Practically it means that after receiving an +CSIM/APDU command the TA is firing off immediately behind a second one: an APDU with INS code C0 or a 'GET RESPONSE', without waiting for the actual AT+CSIM/'GET RESPONSE' command, which is a lot slower. The TA keeps the answer from the SIM in a buffer until the TE's AT+CSIM/'GET RESPONSE' comes around and is captured by the TA.

The TA then gives the content of the buffer as reply and clears it afterwards. If a different APDU passes by from an APDU/'GET RESPONSE' the buffer is cleared anyway.

Another problem is that the smart card reader performs also other tasks than those which it receives from the TA, for example telecommunication tasks, which could involve a change of its address pointer between the receipt of the APDU and the 'GET RESPONSE'. In order to ensure that the 'GET RESPONSE' which is fired off by the TA immediately behind the actual APDU takes the correct response, the smart card reader checks its address pointer and corrects it if necessary, before reading the response and returning it to the TA.

The procedure is in fact as follows. The TE sends an APDU wrapped in the AT+CSIM command to the TA, which forwards the APDU to the SIM reader. The APDU in fact comprises an intended address of a memory location on the SIM, from which a response is to be got. The SIM reader sets its address pointer to the supplied intended address, which ripples back to the TA and is stored in the third buffer. The TA then takes initiative and sends a 'GET RESPONSE' to the SIM reader, along with the intended address stored in the third buffer. The SIM reader checks its address pointer by means of the value supplied from the third buffer, i.e. the intended address, and corrects if necessary, and then gets the response from the SIM at the intended address. Finally the response is returned to the TA, where it is stored in the first buffer until the AT+CSIM/'GET RESPONSE' from the application running on the host device comes round.

A third measure is a modification in the AT+CPIN command on the modem ME, which is used for questioning the status of the SIM's user personal codes PIN & PUK. The smart card comprises one or more registers CHVx for storing the PIN & PUK codes or a status thereof. Normally, the modem ME - when performing a personal code request command like AT+CPIN or AT+CPIN? - would refer to a copy of the CHVx registers which is created on power-up of the smart card and kept on the smart card reader. With the method of the invention, it is preferred that the modem ME always refers to the CHVx registers, since there is a possibility that their contents have been changed by an application running on the host device TE and that the copy kept on the smart card reader no longer corresponds to the actual values.

The host applications preferably use the access command AT+CSIM with attached APDU command for evaluating or accessing the CHVx registers on the smart card, instead of AT+CPIN or AT+CPIN? (AT+CPIN is a command to ask for the status of the PIN (AT+CPIN?) plus to enter the PIN code (AT+CPIN=0000)). The reason for letting the host applications use AT+CSIM/APDU is that AT+CPIN or AT+CPIN? by de facto standard would initiate the protocol stack PS, while interference with any telecommunication tasks is to be avoided.

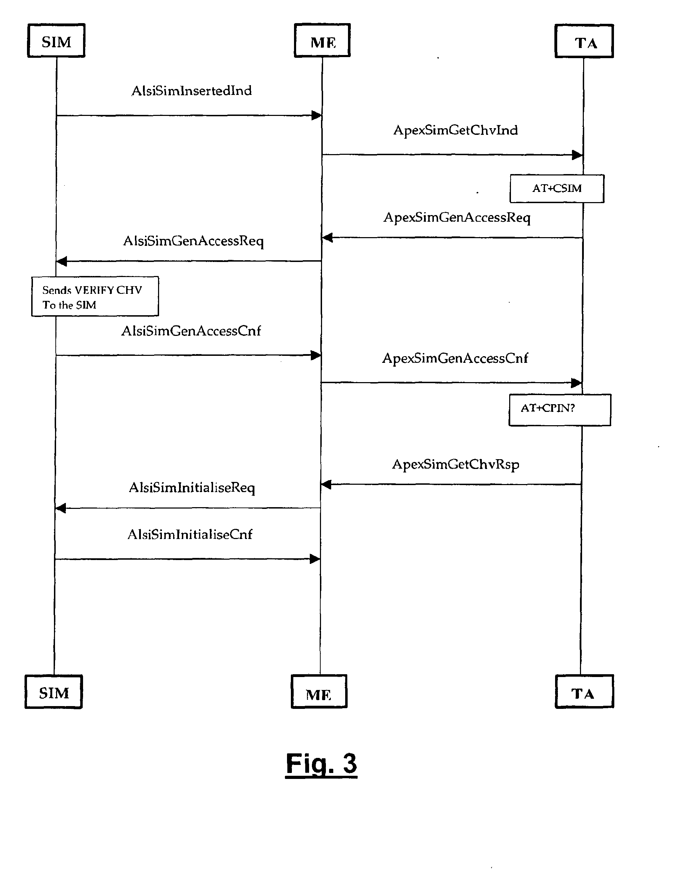

These measures are further clarified in Fig. 2 and Fig. 3. Fig. 2 shows how use is made of the AT+CSIM/APDU command for accessing the CHVx registers. Once the SIM is inserted, the Smart card reader sends an AlsiSimInsertedInd to the ME. The AlsiSimInsertedInd states the status of the PIN. (i.e. whether it is enabled/disabled/blocked and the number of remaining retries...). The ME then sends an ApexSimGetChvInd to all the registered tasks to request the user(TE) to enter the PIN. At this stage, the ME is waiting for the ApexSimGetChvRsp to come back in order to carry on the initialisation of the ME. With the method of the invention, the requirement is dropped in TA to have first entered the PIN code before any other AT command might be launched. As a result, any AT command can be sent before 'AT+CPIN?' (or 'AT+CPIN=xxxx') and so the PIN code can be entered wrapped in an AT+CSIM command.

Fig. 2 shows that the ME sends an ApexSimGetChvInd to the registered tasks. Given the ApexSimGetChvRsp never comes back, the ME does not send any AlsiSimInitialiseReq to the Smart card reader, and the ME initialisation PS stops there.

On the other hand, Fig. 3 shows how 'AT+CPIN?' command is modified to force the ME initialisation PS after the registers CHVx (PIN) are verified and OK, which meets the network operators' request that the terminal should not register to the network before the PIN code is entered in good order.

In any case 'AT+CPIN?' command always returns the actual status of the PIN, even if the PIN is verified using AT+CSIM command. If for instance the PUK entry code is required effectively the 'AT+CPIN?' should notify so. This is achieved by forcing TA to effectively request the status from the SIM itself instead of relying on the copied value stored in TA. An alternative solution would be to send an indication to TA each time the status of the PIN changes.

In the case of the user(TE) entering the PIN with 'AT+CPIN', an ApexSimGetChvRsp is sent, conveying the CHV value. Once the ME receives the ApexSimGetChvRsp, the ME then sends the AlsiSimIntialiseReq to the Smart card reader. The Smart card reader passes the CHV1 value to the SIM (VERIFY CHV command is sent to the SIM). Once the PIN has been verified, the AlsiSiminitialiseCnf comes back, and the ME carries on starting the protocol stack PS. At least entering the PIN with 'AT+CPIN' will initiate a probing first for the actual status of the PIN as if it were an 'AT+CPIN?' was requested.

In summary, in the method of the invention, the AT+CPIN/AT+CPIN? is reserved for modem tasks, while applications on the host device need to use AT+CSIM/APDU for accessing the PIN/PUK codes on the SIM. Not only does this have the advantage of preventing that an application on the host device would interfere in telecommunication tasks performed by the protocol stack, but also that prior art applications intended for running on the modem do not need to be modified.

**Claims**

1. A method for accessing a smart card (SIM) from a host device (TE), the smart card being connected to the host device (TE) via a telecommunications card (MT) which enables telecommunication between the host device (TE) and a telecommunications network which requires a smart card (SIM) for user identification, the telecommunications card (MT) comprising a command interpreter (TA) for interpreting host device commands and a modem (ME) with associated smart card reader for enabling said telecommunication and user identification, the modem (ME) being only accessible to the host device via the command interpreter (TA), **characterised in that** the method comprises the steps of:

   a) providing an access command (AT+CSIM) on the host device, said access command instructing the command interpreter (TA) to pass on any attached command originating from the host device (TE) to the smart card reader,
   b) attaching an application command, APDU, to said access command (AT+CSIM) and forwarding both to the command interpreter (TA),
   c) performing said application command, APDU, on the smart card reader,
   d) storing a response given by the smart card (SIM) to said application command in a first buffer which is accessible towards the host device (TE).

2. A method according to claim 1, **characterised in that** the method further comprises the step of:

   e) including said access command (AT+CSIM) in a driver provided on the host device which is available to any application running on the host device (TE), so that any such application can attach application commands to said access command (AT+CSIM).

3. A method according to claim 2, **characterised in that** the method further comprises the steps of:

   f) storing smart card type data in a second buffer accessible towards the host device (TE),
   g) including a type request command in said driver enabling readout of said smart card type data from the second buffer.

4. A method according to any one of the claims 1-3, **characterised in that** the smart card reader maintains an address pointer, that the command interpreter (TA) comprises a third buffer for storing an address and that said application command comprises an intended address of a memory location on the smart card, the intended address being stored in the third buffer upon receipt of the application command by the command interpreter (TA) in step b); step c) comprising setting the address pointer of the smart card reader to the intended address, and subsequently on initiative of the command interpreter getting a response from the smart card at the intended address stored in the third buffer; the smart card reader comparing the intended address to the address pointer and correcting the latter if necessary before sending the response to the command interpreter in step d).

5. A method according to any one of the claims 1-4, **characterised in that** the smart card comprises one or more registers for storing one or more user personal codes or a status thereof, and that the modem (ME) - when performing a personal code request command, AT+CPIN / AT+CPIN?, - always refers to said one or more smart card registers and not to any modem registers which store a copy of said one or more smart card registers.

6. A method according to any one of the claims 1-5, **characterised in that** the smart card comprises one or more registers for storing one or more user personal codes or a status thereof, and that for evaluating said one or more registers on the smart card from the host device use is made of an access command (AT+CSIM) with attached application command, in order to avoid interfering with telecommunication tasks performed by the protocol stack.

7. A system comprising a host device (TE), a smart card (SIM) and a telecommunications card (MT), the smart card being connected to the host device (TE) via the telecommunications card (MT) which enables telecommunication between the host device (TE) and a telecommunications network which requires a smart card (SIM) for user identification, the telecommunications card (MT) comprising a command interpreter (TA) for interpreting host device commands and a modem (ME) with associated smart card reader for enabling said telecommunication and user identification, the modem (ME) being only accessible to the host device via the command interpreter (TA), **characterised in that** an access command (AT+CSIM) is provided on the host device, said access command instructing the command interpreter (TA) to pass on any attached command originating from the host device (TE) to the smart card reader, and that the system is provided with an algorithm configured for performing the steps of:

> h) taking said access command (AT+CSIM), attaching an application command, APDU, to said access command (AT+CSIM) and forwarding both to the command interpreter (TA),
> i) performing said application command, APDU, on the smart card reader,
> j) storing a response given by the smart card (SIM) to said application command in a first buffer which is accessible towards the host device (TE),
> k) reading out said response from the first buffer.

8. A system according to claim 7, **characterised in that** the algorithm is provided for performing the initial step of reading out smart card type data from a second buffer accessible towards the host device (TE) by means of a type request command.

9. A system according to claim 7 or 8, **characterised in that** the smart card reader maintains an address pointer, that the command interpreter (TA) comprises a third buffer for storing an address and that said application command comprises an intended address of a memory location on the smart card, the intended address being stored in the third buffer upon receipt of the application command by the command interpreter (TA) in step h); step i) comprising setting the address pointer of the smart card reader to the intended address, and subsequently on initiative of the command interpreter getting a response from the smart card at the intended address stored in the third buffer; the smart card reader comparing the intended address to the address pointer and correcting the latter if necessary before sending the response to the command interpreter in step j).

10. Use of a telecommunications card (MT), the telecommunications card (MT) being provided for enabling telecommunication between a host device (TE) and a telecommunications network which requires a smart card (SIM) for user identification, the telecommunications card (MT) comprising:

> - a command interpreter (TA) for interpreting host device commands;
> - a modem (ME) for enabling said telecommunication between said host device and said telecommunications network, the modem (ME) being only accessible to the host device via the command interpreter (TA);
> - and a smart card reader associated with said modem for enabling said user identification towards said telecommunications network;

**characterised in that** said use comprises using said telecommunications card (MT) as a generic smart card reader for the host device (TE).

**Patentansprüche**

1. Verfahren zum Zugreifen auf eine Chipkarte (SIM) von einem Host-Gerät (TE) aus, wobei die Chipkarte mit dem Host-Gerät (TE) über eine Telekommunikationskarte (MT) verbunden ist, wodurch Telekommunikation zwischen dem Host-Gerät (TE) und einem Telekommunikationsnetzwerk ermöglicht wird, welches eine Chipkarte (SIM) zur Benutzeridentifikation erfordert, wobei die Telekommunikationskarte (MT) ein Befehlsinterpretierprogramm (TA) zum Interpretieren von Befehlen des Host-Gerätes und ein Modem (ME) mit einem zugehörigen Chipkartenlesegerät umfasst, um die Telekommunikation und Benutzeridentifikation zu ermöglichen, wobei nur das Host-Gerät mittels des Befehlsinterpretierprogramms (TA) auf das Modem (ME) zugreifen kann, **dadurch gekennzeichnet, dass** das Verfahren die nachfolgenden Schritte umfasst:

   a) Bereitstellen eines Zugriffsbefehls (AT+CSIM) auf dem Host-Gerät, wobei der Zugriffsbefehl das Befehlsinterpretierprogramm (TA) anweist, jeden angehängten Befehl, der von dem Host-Gerät (TE) ausgeht, an das Chipkartenlesegerät weiterzugeben,
   b) Anhängen eines Befehls einer Anwendung, APDU, an den Zugriffsbefehl (AT+CSIM) und Weiterleiten von beiden an das Befehlsinterpretierprogramm (TA),
   c) Ausführen des Befehls der Anwendung, APDU, auf dem Chipkartenlesegerät,
   d) Speichern einer Antwort, die durch die Chipkarte (SIM) auf den Befehl der Anwendung hin gegeben wird, in einem ersten Puffer, auf den in Richtung des Host-Gerätes (TE) zugegriffen werden kann.

2. Verfahren nach Anspruch 1, **dadurch gekennzeichnet, dass** das Verfahren des Weiteren die nachfolgenden Schritte umfasst:

   e) Einschließen des Befehls der Anwendung (AT+CSIM) in einen Treiber, der auf dem Host-Gerät (TE) zur Verfügung gestellt wird, der für jede Anwendung verfügbar ist, die auf dem Host-Gerät (TE) läuft, so dass irgendeine beliebige solche Anwendung Befehle der Anwendung an den Zugriffsbefehl (AT+CSIM) anhängen kann.

3. Verfahren nach Anspruch 2, **dadurch gekennzeichnet, dass** das Verfahren des Weiteren die nachfolgenden Schritte umfasst:

   f) Speichern von Daten des Chipkartentyps in einem zweiten Puffer, auf den in Richtung des Host-Gerätes (TE) zugegriffen werden kann,
   g) Einschließen eines Typenanforderungsbefehls in dem Treiber, wodurch das Auslesen der Daten des Chipkartentyps aus dem zweiten Puffer ermöglicht wird.

4. Verfahren nach irgendeinem der Ansprüche 1 bis 3, **dadurch gekennzeichnet, dass** das Chipkartenlesegerät einen Adresszeiger aufrechterhält, dass das Befehlsinterpretierprogramm (TA) einen dritten Puffer zum Speichern einer Adresse umfasst und dadurch dass der Befehl der Anwendung eine Verwendungsadresse einer Speicherstelle auf der Chipkarte umfasst, wobei die Verwendungsadresse in dem dritten Puffer nach Empfang des Befehls der Anwendung durch das Befehlsinterpretierprogramm (TA) in Schritt b) gespeichert wird; wobei Schritt c) das Einstellen des Adresszeigers des Chipkartenlesegerätes auf die Verwendungsadresse umfasst und anschließend, auf Veranlassung des Befehlsinterpretierprogramms hin, das Erhalten einer Antwort von der Chipkarte an der Verwendungsadresse, die in dem dritten Puffer gespeichert ist; wobei das Chipkartenlesegerät die Verwendungsadresse mit dem Adresszeiger vergleicht und letzteren, falls erforderlich, vor dem Versenden der Antwort an das Befehlsinterpretierprogramm in Schritt d) korrigiert.

5. Verfahren nach irgendeinem der Ansprüche 1 bis 4, **dadurch gekennzeichnet, dass** die Chipkarte ein oder mehrere Register zum Speichern von einem oder mehreren persönlichen Benutzercodes oder deren Status umfasst, und dadurch, dass das Modem (ME) - wenn es einen Befehl zur Anforderung des persönlichen Codes, AT+CPIN / AT+CPIN?, ausführt, - sich immer auf das eine oder mehrere Chipkartenregister und nicht auf irgendwelche Modemregister bezieht, welche eine Kopie des einen oder von mehreren Chipkartenregistern speichern.

6. Verfahren nach irgendeinem der Ansprüche 1 bis 5, **dadurch gekennzeichnet, dass** die Chipkarte ein oder mehrere Register zum Speichern von einem oder mehreren persönlichen Benutzercodes oder von deren Status umfasst, und dadurch, dass, zum Auswerten des einen oder von mehreren Registern auf der Chipkarte von dem Host-Gerät, Gebrauch von einem Zugriffsbefehl (AT+CSIM) mit angehängtem Befehl der Anwendung gemacht wird, um Interferenz mit Telekommunikationsaufgaben zu vermeiden, die durch den Protokollstapel ausgeführt werden.

**7.** System, umfassend ein Host-Gerät (TE), eine Chipkarte (SIM) und eine Telekommunikationskarte (MT), wobei die Chipkarte mit dem Host-Gerät (TE) über die Telekommunikationskarte (MT) verbunden ist, wodurch Telekommunikation zwischen dem Host-Gerät (TE) und einem Telekommunikationsnetzwerk ermöglicht wird, welches eine Chipkarte (SIM) zur Benutzeridentifikation erfordert, wobei die Telekommunikationskarte (MT) ein Befehlsinterpretierprogramm (TA) zum Interpretieren von Befehlen des Host-Gerätes und ein Modem (ME) mit einem zugehörigen Chipkartenlesegerät umfasst, um die Telekommunikation und Benutzeridentifikation zu ermöglichen, wobei nur das Host-Gerät mittels des Befehlsinterpretierprogramms (TA) auf das Modem (ME) zugreifen kann, **dadurch gekennzeichnet, dass** auf dem Host-Gerät ein Zugriffsbefehl (AT+CSIM) zur Verfügung gestellt wird, wobei der Zugriffsbefehl das Befehlsinterpretierprogramm (TA) anweist, beliebige angehängte Befehle, die von dem Host-Gerät (TE) ausgehen, an das Chipkartenlesegerät weiterzugeben, und dadurch, dass dem System ein Algorithmus zur Verfügung gestellt wird, der zum Ausführen der nachfolgenden Schritte ausgestaltet ist:

h) Annehmen des Zugriffsbefehls (AT+CSIM), Anhängen eines Befehls einer Anwendung, APDU, an den Zugriffsbefehl (AT+CSIM) und Weiterleiten von beiden an das Befehlsinterpretierprogramm (TA),

i) Ausführen des Befehls der Anwendung, APDU, auf dem Chipkartenlesegerät,

j) Speichern einer Antwort, die durch die Chipkarte (SIM) auf den Befehl der Anwendung hin gegeben wird, in einem ersten Puffer, auf den in Richtung des Host-Gerätes (TE) zugegriffen werden kann,

k) Auslesen der Antwort aus dem ersten Puffer.

**8.** System nach Anspruch 7, **dadurch gekennzeichnet, dass** der Algorithmus zum Ausführen des anfänglichen Schritts des Auslesens der Daten des Chipkartentyps aus einem zweiten Puffer zur Verfügung gestellt wird, auf den in Richtung des Host-Gerätes (TE) mittels eines Typenanforderungsbefehls zugegriffen werden kann.

**9.** System nach Anspruch 7 oder 8, **dadurch gekennzeichnet, dass** das Chipkartenlesegerät einen Adresszeiger aufrechterhält, dass das Befehlsinterpretierprogramm (TA) einen dritten Puffer zum Speichern einer Adresse umfasst und, dass der Befehl der Anwendung eine Verwendungsadresse einer Speicherstelle auf der Chipkarte umfasst, wobei die Verwendungsadresse in dem dritten Puffer nach Empfang des Befehls der Anwendung durch das Befehlsinterpretierprogramm (TA) in Schritt h) gespeichert wird; wobei Schritt i) das Einstellen des Adresszeigers des Chipkartenlesegerätes auf die Verwendungsadresse umfasst und anschließend, auf Veranlassung des Befehlsinterpretierprogramms hin, das Erhalten einer Antwort von der Chipkarte an der Verwendungsadresse, die in dem dritten Puffer gespeichert ist; wobei das Chipkartenlesegerät die Verwendungsadresse mit dem Adresszeiger vergleicht und letzteren, falls erforderlich, vor dem Versenden der Antwort an das Befehlsinterpretierprogramm in Schritt j) korrigiert.

**10.** Verwendung einer Telekommunikationskarte (MT), wobei die Telekommunikationskarte (MT) zur Verfügung gestellt wird, um Telekommunikation zwischen einem Host-Gerät (TE) und einem Telekommunikationsnetzwert zu ermöglichen, welches eine Chipkarte (SIM) zur Benutzeridentifikation erfordert, wobei die Telekommunikationskarte (MT) umfasst:

- ein Befehlsinterpretierprogramm (TA) zum Interpretieren von Befehlen des Host-Gerätes;
- ein Modem (ME) zum Ermöglichen der Telekommunikation zwischen dem Host-Gerät und dem Telekommunikationsnetzwerk, wobei nur das Host-Gerät auf das Modem (ME) über das Befehlsinterpretierprogramm (TA) zugreifen kann,
- und ein Chipkartenlesegerät, das dem Modem zugeordnet ist, um die Benutzeridentifikation in Richtung des Telekommunikationsnetzwerkes zu ermöglichen;

**dadurch gekennzeichnet, dass** die Verwendung das Verwenden der Telekommunikationskarte (MT) als ein generisches Chipkartenlesegerät für das Host-Gerät (TE) umfasst.

**Revendications**

**1.** Procédé d'accès à une carte à puce (SIM) par un dispositif hôte (TE), la carte à puce étant connectée au dispositif hôte (TE) par l'intermédiaire d'une carte de télécommunications (MT) qui permet la télécommunication entre le dispositif hôte (TE) et un réseau de télécommunications qui requiert une carte à puce (SIM) pour l'identification de l'utilisateur, la carte de télécommunications (MT) comprenant un interpréteur de commandes (TA) pour interpréter des commandes du dispositif hôte et un modem (ME) avec lecteur de carte à puce associé pour permettre ladite télécommunication et identification de l'utilisateur, le modem (ME) n'étant accessible au dispositif hôte que par l'intermédiaire de l'interpréteur de commandes (TA), **caractérisé en ce que** le procédé comprend les étapes consistant à :

a) prévoir une commande d'accès (AT+CSIM) sur le dispositif hôte, ladite commande d'accès donnant instruction à l'interpréteur de commandes (TA) de faire passer toute commande attachée provenant du dispositif hôte (TE) au lecteur de carte à puce,

b) attacher une commande d'application, APDU, à ladite commande d'accès (AT+CSIM) et transmettre les deux à l'interpréteur de commandes (TA),

c) exécuter ladite commande d'application, APDU, sur le lecteur de carte à puce,

d) stocker une réponse donnée par la carte à puce (SIM) à ladite commande d'application dans une première mémoire tampon qui est accessible en direction du dispositif hôte (TE).

2. Procédé selon la revendication 1, **caractérisé en ce que** le procédé comprend en outre l'étape consistant à :

e) inclure ladite commande d'accès (AT+CSIM) dans un pilote prévu sur le dispositif hôte qui est accessible à toute application tournant sur le dispositif hôte (TE) de sorte que toute application de ce type peut attacher des commandes d'application à ladite commande d'accès (AT+SCIM).

3. Procédé selon la revendication 2, **caractérisé en ce que** le procédé comprend en outre l'étape consistant à :

f) stocker des données de type carte à puce dans une deuxième mémoire tampon accessible en direction du dispositif hôte (TE),

g) inclure une commande de requête type dans ledit pilote permettant d'extraire lesdites données de type carte à puce de la deuxième mémoire tampon.

4. Procédé selon l'une quelconque des revendications 1 - 3, **caractérisé en ce que** ledit lecteur de carte à puce maintient un pointeur d'adresse, **en ce que** l'interpréteur de commandes (TA) comprend une troisième mémoire tampon pour stocker une adresse et **en ce que** ladite commande d'application comprend une adresse prévue d'un emplacement dans la mémoire sur la carte à puce, l'adresse prévue étant stockée dans la troisième mémoire tampon dès réception de la commande d'application par l'interpréteur de commandes (TA) à l'étape b) ; l'étape c) comprenant le placement du pointeur d'adresse du lecteur de carte à puce sur l'adresse prévue et ensuite, sur initiative de l'interpréteur de commandes, l'obtention d'une réponse de la carte à puce à l'adresse prévue stockée dans la troisième mémoire tampon ; le lecteur de carte à puce comparant l'adresse prévue au pointeur d'adresse et corrigeant ce dernier si nécessaire avant d'envoyer la réponse à l'interpréteur de commandes à l'étape d).

5. Procédé selon l'une quelconque des revendications 1 - 4, **caractérisé en ce que** la carte à puce comprend un ou plusieurs registres pour stocker un ou plusieurs codes personnels de l'utilisateur ou un état de ceux-ci, et **en ce que** le modem (ME) - quand il exécute une commande de requête de code personnel, AT+CPIN / AT+CPIN?, - se réfère toujours audit un ou plusieurs registres de carte à puce et non à des registres de modem qui stockent une copie dudit un ou plusieurs registres de carte à puce.

6. Procédé selon l'une quelconque des revendications 1 - 5, **caractérisé en ce que** la carte à puce comprend un ou plusieurs registres pour stocker un ou plusieurs codes personnels de l'utilisateur ou un état de ceux-ci, et **en ce que** pour évaluer ledit un ou plusieurs registres sur la carte à puce à partir du dispositif hôte, il est fait usage d'une commande d'accès (AT+CSIM) avec commande d'application attachée, afin d'éviter d'interférer avec des tâches de télécommunication effectuées par la pile de protocoles.

7. Système comprenant un dispositif hôte (TE), une carte à puce (SIM) et une carte de télécommunications (MT), la carte à puce étant connecté au dispositif hôte (TE) par l'intermédiaire de la carte de télécommunications (MT) qui permet la télécommunication avec le dispositif hôte (TE) et un réseau de télécommunications qui requiert une carte à puce (SIM) pour l'identification de l'utilisateur, la carte de télécommunications (MT) comprenant un interpréteur de commandes (TA) pour interpréter des commandes du dispositif hôte et un modem (ME) avec lecteur de carte à puce associé pour permettre ladite télécommunication et identification de l'utilisateur, le modem (ME) n'étant accessible au dispositif hôte que par l'intermédiaire de l'interpréteur de commandes (TA), **caractérisé en ce qu'**une commande d'accès (AT+CSIM) est prévue sur le dispositif hôte, ladite commande d'accès donnant instruction à l'interpréteur de commandes (TA) de transmettre toute commande attachée provenant du dispositif hôte (TE) au lecteur de carte à puce, et **en ce que** le système est pourvu d'un algorithme configuré pour effectuer les étapes consistant à :

> h) prendre ladite commande d'accès (AT+CSIM), attacher une commande d'application, APDU, à ladite commande d'accès (AT+CSIM) et transmettre les deux à l'interpréteur de commandes (TA),
> i) exécuter ladite commande d'application, APDU, sur le lecteur de carte à puce,
> j) stocker une réponse donnée par la carte à puce (SIM) à ladite commande d'application dans une première mémoire tampon qui est accessible en direction du dispositif hôte (TE),
> k) extraire ladite réponse de la première mémoire tampon.

**8.** Système selon la revendication 7, **caractérisé en ce que** l'algorithme est prévu pour effectuer l'étape initiale d'extraction des données de type carte à puce d'une deuxième mémoire tampon accessible en direction du dispositif hôte (TE) au moyen d'une commande de requête type.

**9.** Système selon la revendication 7 ou 8, **caractérisé en ce que** ledit lecteur de carte à puce maintient un pointeur d'adresse, **en ce que** l'interpréteur de commandes (TA) comprend une troisième mémoire tampon pour stocker une adresse et **en ce que** ladite commande d'application comprend une adresse prévue d'un emplacement dans la mémoire sur la carte à puce, l'adresse prévue étant stockée dans la troisième mémoire tampon dès réception de la commande d'application par l'interpréteur de commandes (TA) à l'étape h) ; l'étape i) comprenant le placement du pointeur d'adresse du lecteur de carte à puce sur l'adresse prévue et ensuite, sur initiative de l'interpréteur de commandes, l'obtention d'une réponse de la carte à puce à l'adresse prévue stockée dans la troisième mémoire tampon ; le lecteur de carte à puce comparant l'adresse prévue au pointeur d'adresse et corrigeant ce dernier si nécessaire avant d'envoyer la réponse à l'interpréteur de commandes à l'étape J).

**10.** Utilisation d'une carte de télécommunications (MT), la carte de télécommunications (MT) étant prévue pour permettre la télécommunication entre un dispositif hôte (TE) et un réseau de télécommunications qui requiert une carte à puce (SIM) pour l'identification de l'utilisateur, la carte de télécommunications (MT) comprenant :

> - un interpréteur de commandes (TA) pour interpréter des commandes du dispositif hôte ;
> - un modem (ME) pour permettre ladite télécommunication entre ledit dispositif hôte et ledit réseau de télécommunications, le modem (ME) n'étant accessible au dispositif hôte que par l'intermédiaire de l'interpréteur de commandes (TA) ;
> - et un lecteur de carte à puce associé audit modem pour permettre ladite identification de l'utilisateur en direction dudit réseau de télécommunications ;

**caractérisée en ce que** ladite utilisation comprend l'utilisation de ladite carte de télécommunications (MT) comme un lecteur générique de carte à puce pour le dispositif hôte (TE).

TE — responses → TA — ME status → ME

TE ← AT cmds — TA ← ME control — ME

USER & APPLICATIONS

NETWORK

network messages

## Fig. 1

SIM        ME        TA

AlsiSimInsertedInd

ApexSimGetChvInd

AT+CSIM

ApexSimGenAccessReq

AlsiSimGenAccessReq

Sends VERIFY CHV
To the SIM

AlsiSimGenAccessCnf

SIM        ME        TA

## Fig. 2

**Fig. 3**

**EP 1 523 205 B1**

REFERENCES CITED IN THE DESCRIPTION

**Patent documents cited in the description**

- US 5942738 A
- WO 9827767 A1
- FR 2818764 A1
- DE 19522527 A1